# EUROPEAN PATENT APPLICATION

(11) **EP 3 637 361 A1**
(43) Date of publication of application: **15.04.2020**
(21) Application number: 18813196.5
(22) Date of filing: 20.04.2018
(51) Int. Cl.: G06Q 50/30, G06Q 30/02, H04L 29/06

(54) **COLLECTIVE INTELLIGENCE GATHERING SYSTEM AND METHOD THEREFOR**

(30) Priority: 08.06.2017 KR 20170071620
(71) Applicant: Yoon, Seong Min, Guri-si, Gyeonggi-do 11952 (KR)
(72) Inventor: Yoon, Seong Min, Guri-si, Gyeonggi-do 11952 (KR)
(74) Representative: Loyer & Abello
(86) International application number: PCT/KR2018/004644
(87) International publication number: WO 2018/225942

(57) **Abstract**

The present invention relates to a collective intelligence convergence system and a method thereof, wherein the collective intelligence system includes: an expert opinion management unit which receives and stores expert opinion data such as an opinion on agreement or opposition to a presented issue, at least one ground for the opinion, description of the opinion, and the like,which are transmitted by at least one participating expert; a background knowledge management unit which provides participants with at least one expert opinion data received by the expert opinion management unit to the participants, and processes the opinion of the participants to then store the processed data as a background knowledge data about the issue; a participation data management unit which provides the background knowledge data stored in the background knowledge management unit to the opinion presentation participants to allow the opinion presentation participants to receive opinion presentation participant opinion data input by the opinion presentation participants and to process the received opinion presentation participant opinion data as collective intelligence convergence data; and an expert opinion ranking management unit which determines a ranking based on the opinion presentation participant opinion data stored in the participation data management unit to update the required reading opinion data and the selective reading opinion data based on the ranking and provides the updated data to the background knowledge management unit.

## Description

### TECHNICAL FIELD

The present invention relates to a collective intelligence convergence system and a method thereof. More particularly, the present invention relates to a collective intelligence convergence system based on a required reading opinion and a method thereof which calculates a result using the required reading opinion when an opinion poll or questionnaire survey is conducted in which the required reading opinion necessarily includes opinions of experts in a corresponding field and includes opinions of ordinary persons.

### BACKGROUND ART

Existing opinion polls or surveys, questionnaire surveys, or decision-making methods are conducted on target persons to be polled or surveyed. However, numerical results of the polls or surveys are not only presented by the majority rule on the target persons, but the polls or surveys are also conducted in a state where sufficient information required for the investigation is not given to the target persons, and thus, it is general that the subjects depend on passive and improvisational responses without receiving a thinking time or information to be considered in decision making. Therefore, the poll or survey results may be often derived as the intention of the poll or survey agency.

In Korean Patent Laid-Open Publication No. 10-2009-0095097 (published on September 09, 2009), there is published a system which operates a preliminary opinion poll on a user collective opinion concerning a specific subject.

The publication invention relates to a system which operates a preliminary opinion poll on a user collective opinion concerning a specific subject in which a specific subject requested by a client actively experiences a distribution process of voluntary collective discussion of users participating in a cooperative discussion work related with a specific subject (hereinafter, referred to as "CDW") with subjectivity without unnecessary intervention by a poll or survey agency (a discussion distribution process by a cooperative work of users in the same team, a discussion distribution process by a competition structure of users in different teams, or the like) to thus be widely visualized as a series of rational outcomes. Therefore, based on this, the client can quickly pre-determine a response of a highly reliable market (public) to the corresponding subject, a preference of the highly reliable market (public) to the corresponding subject, and the like before the execution of a specific business related to the subject, and effectively develop and produce new products, business issues, political issues, social issues, and the like that meet the public's preferences through the collection, development and utilization of high-quality ideas.

The publication invention relates to a preliminary opinion poll of a user collective opinion related with a specific subject which derives a CDW result of a group selected by a manager on the specific subject to derives a report through evaluation of interested parties.

However, in the publication invention, since the CDW results are evaluated by users, clients and managers, final results are derived by allowing the interested parties to evaluate public opinion generated by the selected group on the specific subject. As a result, there is a problem that the selection mistake of the group that generates the public opinion may occur and the derived public opinion is polluted by the interested parties.

Therefore, there is a need for an invention capable of deriving deep and objective results by providing a required reading opinion to be necessarily read by opinion presentation participants and a selective reading opinion to be selectively read by the opinion presentation participants in which experts for a presented issue are allowed to participate to converge an agreement or opposition opinion for the presented issue, to present a background knowledge regarding grounds and detailed description of the agreement and opposition opinions on the presented issue and the presented issue and the background knowledge for the agreement and opposition opinions of the experts related with the presented issue are provided for opinion presentation participants to extract consent or non-consent opinions of the opinion presentation participants regarding the agreement and opposition opinions of the experts.

### DESCRIPTION OF EMBODIMENTS

### TECHNICAL PROBLEM

The present invention has been made in an effort to provide a collective intelligence convergence system and a method thereof capable of deriving deep and objective results by providing a required reading opinion to be necessarily read by opinion presentation participants and a selective reading opinion to be selectively read by the opinion presentation participants, in which experts for a presented issue are allowed to participate to converge an agreement or opposition opinion for the presented issue, to present a background knowledge regarding grounds and detailed description of the agreement and opposition opinions on the presented issue and the presented issue and the background knowledge for the agreement and opposition opinions of the experts related with the presented issue are provided for the opinion presentation participants to extract consent or non-consent opinions of the opinion presentation participants regarding the agreement and opposition opinions of the experts.

### SOLUTION TO PROBLEM

According to a first aspect of the present invention, there is provided a system of converging opinions on a set issue via at least one expert terminal and at least one participant terminal which are connected as communication units with a management computer.

The management computer includes: an expert opinion management unit which receives and stores expert opinion data such as an opinion on agreement or opposition to a presented issue, at least one ground for the opinion, description of the opinion, and the like, which are transmitted by at least one participating expert;
a background knowledge management unit which provides participants with at least one piece of the expert opinion data received by the expert opinion management unit to classify the provided expert opinion data into at least one piece of required reading opinion data and at least one piece of selective reading opinion data based on consent and non-consent data to the expert opinion data and score data assigned to the consent and non-consent data which are input by opinion presentation participants of the participants and stores the classified data as a background knowledge about the issue;
a participation data management unit which provides the opinion presentation participants with the background knowledge data stored in the background knowledge management unit to allow the opinion presentation participants to read the background knowledge data and input opinion presentation participant opinion data including consent or non-consent data to the input required reading opinion data and selective reading opinion data and assigned score data and which receives the opinion presentation participant opinion data to process the received opinion presentation participant opinion data as collective intelligence convergence data; and
an expert opinion ranking management unit which determines a ranking based on the opinion presentation participant opinion data stored in the participation data management unit to update the required reading opinion data and the selective reading opinion data based on the ranking and provides the updated data to the background knowledge management unit.

According to a second aspect of the present invention, there is provided a collective intelligence convergence method including: receiving, by a management computer, an agreement or opposition opinion on an issue from a predetermined number of related-field experts on the presented issue as expert opinion data including key grounds and detailed description thereof; receiving, by the management computer, participant opinion data including consent or non-consent opinions and scores of participants by providing the expert opinion data to the participants; determining, by the management computer, rankings of the expert opinion data based on the participant opinion data, determining a predetermined number of pieces of required reading opinion data to be necessarily read by opinion presentation participants on the issue according to the rankings thereof, and determining a predetermined number of pieces of selective reading opinion data to be selectively read by the opinion presentation participants with respect to expert opinion data which is not included in the required reading opinion data and the separate opinions of the participants; receiving, by the management computer, opinion presentation participant opinion data including the consent or non-consent opinions and scores from the opinion presentation participants by providing the required reading opinion data and the selective reading opinion data to the opinion presentation participants; and deriving, by the management computer, collective intelligence convergence data for the issue based on the opinion presentation participant opinion data.

According to a third aspect of the present invention, there is provided a collective intelligence convergence method including: transmitting, by a management computer, an opinion presentation request related to an issue to an expert terminal by inquiring at least one expert in a corresponding field in an expert pool in associated with the issue received; performing, by the at least one expert, expert authentication by accessing the management computer using an at least one expert terminal; providing, by the management computer, an expert opinion presentation form to the at least one expert terminal of the at least one expert whose authentication is completed; transmitting, by the at least one expert terminal, to the management computer, expert opinion data including an agreement or opposition opinion on the issue, grounds and description data thereof input, by the at least one expert, to the opinion presentation form provided by the management computer; storing, by the management computer, the expert opinion data of the agreement or opposition opinion on the issue transmitted from the at least one expert terminal; exposing, by the management computer, decision making information about the issue to opinion presentation participant terminals of participant members; performing, by the opinion presentation participant terminals, participant authentication by accessing the management computer; providing, by the management computer, a predetermined number of pieces of expert data for the issue to the opinion presentation participant terminals of the participants whose authentication is completed; transmitting, to the management computer, participant opinion data including consent and non-consent data for the expert opinion data on the issue input by the participants, score data thereon, and separate opinion data when separate opinions of the participants are presented; determining, by the management computer, a predetermined number of pieces of high-ranking expert opinion data as required reading opinion data by giving a ranking to the expert opinion data based on the participant opinion data transmitted from the opinion presentation participant terminals and determining the expert opinion data which is not included in the required reading opinion data and the separate opinion data of the participants as the selective reading opinion data to be stored as background knowledge data; exposing, by the management computer, decision making information about the issue to opinion presentation participant terminals of opinion presentation participant members; performing, by the opinion presentation participant terminals, opinion presentation participant authentication by accessing the management computer; providing, by the management computer, background knowledge data for the issue to the opinion presentation participant terminals of the opinion presentation participants whose authentication is completed; transmitting, to the management computer, opinion presentation participant opinion data including consent and non-consent data for the required reading opinion data and the selective reading opinion data on the issue included in the background knowledge data input by the opinion presentation participants, and score data thereof; verifying, by the management computer, whether the opinion presentation of the opinion presentation participants participating in the opinion presentation is completed; verifying, by the management computer, whether the rankings of the required reading opinion data and the selective reading opinion data are changed based on the opinion presentation participant opinion data while receiving continuously the opinion presentation of the opinion presentation participants when it is verified that the opinion presentation of the opinion presentation participants is not completed; changing, by the management computer, the required reading opinion data and the selective reading opinion data themselves or the rankings thereof to provide the changed data or rankings to the opinion presentation participant terminals when it is verified that the rankings of the required reading opinion data and the selective reading opinion data are changed; and deriving, by the management computer, collective intelligence convergence data based on the received opinion presentation participant opinion data when it is verified that the opinion presentation of the opinion presentation participants is completed.

### ADVANTAGEOUS EFFECTS OF DISCLOSURE

According to the present invention, it is possible to derive collective intelligence convergence data for a deep and objective issue by providing a required reading opinion to be necessarily read by opinion presentation participants and a selective reading opinion to be selectively read by the opinion presentation participants, in which experts for a presented issue are allowed to participate to converge an agreement or opposition opinion and to present a background knowledge regarding grounds and detailed description of the agreement and opposition opinions on the presented issue and the presented issue and the background knowledge for the agreement and opposition opinions of the experts related with the issue are provided for the opinion presentation participants to extract consent or non-consent opinions of the opinion presentation participants regarding the agreement and opposition opinions of the experts.

### BRIEF DESCRIPTION OF DRAWINGS

FIG. 1 is a schematic configuration diagram of an exemplary embodiment of a collective intelligence convergence system according to the present invention.
FIG. 2 is a schematic configuration diagram of an example of a manager computer which is a main part in the exemplary embodiment of the collective intelligence convergence system according to the present invention.
FIG. 3 is a schematic configuration diagram of an example of an expert opinion presentation form in the example of the manager computer which is the main part in the exemplary embodiment of the collective intelligence convergence system according to the present invention.
FIG. 4 is a schematic configuration diagram of an example of collective intelligence convergence data derived by the exemplary embodiment of the collective intelligence convergence system according to the present invention.
FIG. 5 is a flowchart for describing an exemplary embodiment of a collective intelligence convergence method according to the present invention.

### BEST MODE

As a best mode for carrying out the present invention, there are provided a collective intelligence convergence system and a method thereof, wherein the collective intelligence convergence system includes: an expert opinion management unit which receives and stores expert opinion data such as an opinion on agreement or opposition to a presented issue, at least one ground for the opinion, description of the opinion, and the like, which are transmitted by at least one participating expert; a background knowledge management unit which provides participants with at least one piece of the expert opinion data received by the expert opinion management unit to classify the provided expert opinion data into at least one piece of required reading opinion data and at least one piece of selective reading opinion data based on consent and non-consent data to the expert opinion data and score data assigned to the consent and non-consent data and stores the classified data as a background knowledge about the issue; a participation data management unit which provides opinion presentation participants with the background knowledge data stored in the background knowledge management unit to allow the opinion presentation participants to read the background knowledge data and receives opinion presentation participant opinion data including consent or non-consent data to the input required reading opinion data and selective reading opinion data and assigned score data to process the received opinion presentation participant opinion data as collective intelligence convergence data; and an expert opinion ranking management unit which determines a ranking based on the opinion presentation participant opinion data stored in the participation data management unit to update the required reading opinion data and the selective reading opinion data based on the ranking and provides the updated data to the background knowledge management unit.

### MODE OF DISCLOSURE

Hereinafter, exemplary embodiments of the present invention will be described in detail with reference to the accompanying drawings.

For convenience of the description of the exemplary embodiments of the present invention, among terms used in the description of the exemplary embodiments of the present invention to be described below, configurations of the present invention may refer to configurations of hardware resources and also refer to configurations of web programs or computer programs executed by using the hardware resources. For example, a management computer among the configurations of the present invention may be computer hardware itself and may be web programs or computer programs executed by using the hardware resources of the computer.

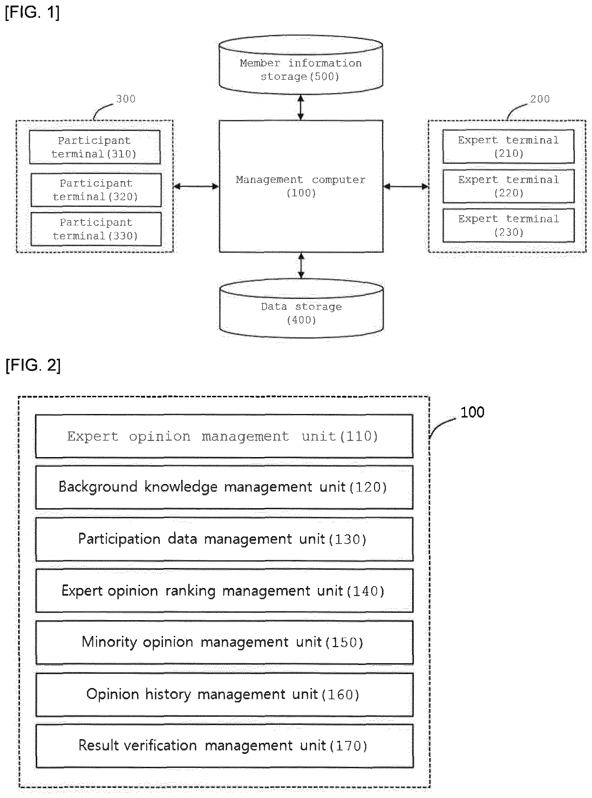

FIG. 1 is a schematic configuration diagram of an exemplary embodiment of a collective intelligence convergence system of the present invention. As illustrated in FIG. 1, the collective intelligence convergence system according to the embodiment of the present invention includes: a management computer 100 for providing and collecting data to participating terminals to derive collective intelligence convergence data on an issue; at least one expert terminal 200 accessing the management computer using a communication unit to provide expert opinion data on the presented issue and inputted by at least one expert; at least one opinion presentation participant terminal 300 accessing the management computer using a communication unit to read the expert opinion data of the at least one expert on the presented issue by the at least one opinion presentation participant and provide at least one opinion presentation participant opinion for the at least one expert opinion; a data storage unit 400 included in the management computer or accessing the management computer using the communication unit to store data provided to the at least one expert terminal and the at least one opinion presentation participant terminal for converging the collective intelligence, the at least one piece of expert opinion data, and the at least one piece of opinion presentation participant opinion data; and a member information storage unit 500 included in the management computer or accessing the management computer using the communication unit to store information on expert members and information on opinion presentation participant members.

The management computer may be configured as a server computer including a web program or computer program for the collective intelligence convergence and a communication unit capable of communicating with the expert terminal and the participant terminal.

Further, the expert terminal and the opinion presentation participant terminal may be configured as desktop computers, laptop computers, tablet computers, and mobile communication terminals such as smart phones, which may include a communication unit capable of communicating with the management computer and execute web programs or computer application programs provided by the management computer.

FIG. 2 is a schematic configuration diagram of an example of a manager computer which is a main part in the exemplary embodiment of the collective intelligence convergence system according to the present invention. As illustrated in FIG. 2, the management computer 100 according to the embodiment of the present invention includes: an expert opinion management unit 110 which receives and stores expert opinion data such as an opinion on agreement or opposition to a presented issue and transmitted by at least one participating expert, at least one ground for the opinion, description of the opinion, and the like;
a background knowledge management unit 120 which provides opinion presentation participants with at least one piece of the expert opinion data received by the expert opinion management unit 110 to classify the at least one piece of the expert opinion data into at least one piece of required reading opinion data and at least one piece of selective reading opinion data on each opinion for agreement and opposition to store the classified result, and provides at least one opinion presentation participant with the stored required reading opinion data and selective reading opinion data on each opinion for the agreement and opposition as a background knowledge for the issue;
a participation data management unit 130 which reads the required reading opinion data and the selective reading opinion data on each opinion for agreement and opposition provided from the background knowledge management unit 120 and receives and stores collective intelligence data including input consent or non-consent opinion data and score data on the required reading opinion data and the selective reading opinion data;
an expert opinion ranking management unit 140 which determines a ranking based on the collective intelligence data stored in the participation data management unit 130 to update the required reading opinion data and the selective reading opinion data based on the ranking and provides the updated data to the background knowledge management unit 120;
a minority opinion management unit 150 which receives a small number of consents of the participants or opinion presentation participants, but gives a ranking rising position to an opinion having a high score;
an opinion history management unit 160 which provides comments on a source of the corresponding opinion data and a rebuttal or supplementary opinion to show in detail a main text and a pre-step and a post-step in order that the opinion presentation participants can easily find out a pre- or post-situation about whether a corresponding opinions come from what context and situation when various opinions exist complicated in a process that the opinion presentation participants read the required reading opinion data and the selective reading opinion data; and
a result verification management unit 170 which generates a predetermined form of a report based on the collective intelligence data stored in the participation data management unit 130 to provide the generated report to an issue provider and provides the collective intelligence data forming the basis of the report upon a request of the issue provider.

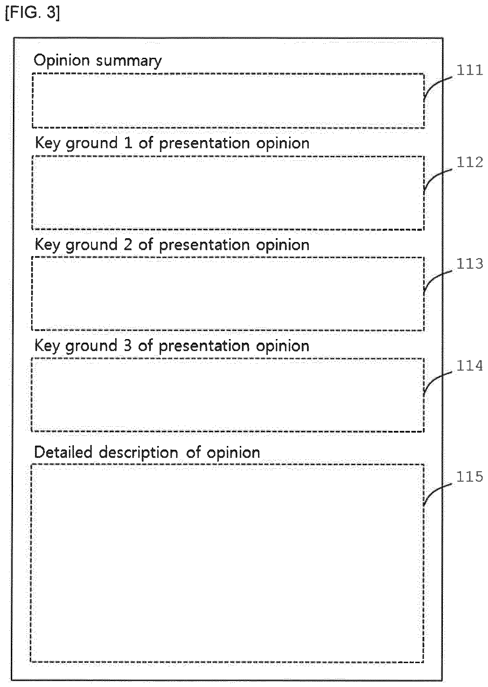

FIG. 3 is a schematic configuration diagram of an example of an expert opinion presentation form in the example of the management computer which is the main part in the exemplary embodiment of the collective intelligence convergence system according to the present invention. As illustrated in FIG. 3, an expert opinion presentation form according to the embodiment of the present invention is data which is provided to the expert terminal 200 by the management computer 100 and includes an opinion summary input portion 111 for inputting, by an expert, an agreement or opposition opinion on an issue; key ground input portions 112, 113, and 114 for inputting, by the expert, key grounds on the agreement or opposition opinion input in the opinion summary input portion 111 by the expert; and a details input portion 115 for inputting, by the expert, a detailed description on a reason for the agreement or opposition opinion by the expert.

Preferably, the opinion summary input portion 111 may be configured to input one line of data, for example, within 50 characters of the agreement or opposition opinion on the issue to be provided to the opinion presentation participant terminal 300. Further, the key ground input portions 112, 113, and 114 may be configured to restrict the key grounds for the agreement or opposition opinion on the issue to predetermined items, for example, three items and contain the ground content within, for example, 200 characters. Further, the details input portion 115 may be configured not to restrict the number of characters to be input so as to describe the agreement or opposition opinion on the issue in detail.

Referring to FIGS. 1 to 3, the collective intelligence convergence system according to the embodiment of the present invention will be described in more detail.

The management computer 100 inquires information about at least one expert in a corresponding field in an expert pool stored in the member information storage unit 400, preferably inquires information about at least six experts in associated with a received issue and transmits an opinion presentation request message for the issue to the expert terminal or terminals (hereinbelow, referred to as terminals) 200 of the inquired expert or experts (hereinbelow, referred to as experts). The experts who receive the message from the management computer 100 access the management computer 100 using the expert terminals 200 and perform expert authentication. The management computer 100 provides the expert terminals 200 of the experts whose authentication has been completed with an opinion presentation form to input the expert's opinion on the issue. The experts input the opinions of the experts on the issue in the opinion presentation form output to the expert terminals 200. The experts may first input a summary of the agreement or opposition opinion on the issue into one line, for example, 50 characters or less, in the opinion summary input portion 111 of the opinion presentation form. Then, the description within 200 characters based on the key grounds for the agreement or opposition reason for the issue, preferably, three grounds may be inputted in the key ground input portions 112, 113, and 114. The present invention is not limited thereto and three or more key grounds may also be presented and inputted therein. Next, the detailed description of the agreement or opposition reason for the issue may be inputted in the details input portion 115. Preferably, the detailed description may not limit the number of characters. The management computer 100 receives the expert opinion data transmitted from the expert terminals 200 and stores the expert opinion data as background knowledge data on the agreement or opposition to the issue. The management computer 100 inquires opinion presentation participant member information stored in the member information storage unit 500 and transmits a participation message for the issue to the opinion presentation participant terminals 300 of a predetermined number of opinion presentation participant members. In this case, the present invention is not limited thereto and the opinion presentation participants accessing the management computer 100 may inquire the issue and participate in the issue. The participants who receive the participation message from the management computer 100 access the management computer 100 and perform opinion presentation participant authentication. The management computer 100 transmits and outputs the issue and the opinion summary data of the experts for the issue to the opinion presentation participant terminals 300 of the opinion presentation participants whose authentication is completed. The opinion presentation participants select the issue and the opinion summary data of the experts output on the opinion presentation participant terminals 300, verify the background knowledge data including the key grounds of the presentation opinion and the detailed description, and give scores according to consent or non-consent opinions for the verified expert opinion data and the empathy degree of the expert opinion data. Preferably, the score may be input in a range of 1 to 100 points for the consent or non-consent expert opinion data. It is preferred to input the score within the range of 51 to 100 for the consent expert opinion data, and the score within the range of 0 to 50 for the non-consent expert opinion data. Also, preferably, when the background knowledge data is verified, only when the key grounds and the detailed description of the expert opinion data are all read, the management computer 100 may be configured to give the consent or non-consent and the score for the corresponding expert opinion. The management computer 100 gives a ranking of the expert opinion data with reference to the consent or non-consent to the expert opinion data transmitted from the opinion presentation participant terminal 300 and score data thereof, determines a predetermined number of pieces of high-ranking expert opinion data as the required reading opinion data, and determines a predetermined number of pieces of lower-ranking expert opinion data which is not included in the required reading opinion data as the selective reading opinion data, to be stored therein. The management computer 100 inquires opinion presentation participant member information stored in the member information storage unit 500 and transmits an opinion presentation participation message for the issue to the opinion presentation participant terminals 300 of a predetermined number of opinion presentation participant members. In this case, the present invention is not limited thereto and the opinion presentation participants accessing the management computer 100 may inquire the issue and participate in the issue. The opinion presentation participants who receive the opinion presentation participation message from the management computer 100 access the management computer 100 and perform opinion presentation participant authentication. The management computer 100 transmits and outputs lists of the predetermined number of pieces of required reading opinion data and selective reading opinion data stored for the issue to the opinion presentation participant terminals 300 of the opinion presentation participants whose authentication is completed. The opinion presentation participants need to necessarily read the required reading opinion data from the required reading opinion data list and the selective reading opinion data list output to the opinion presentation participant terminals 300 and the selective reading opinion data may be configured to be selectively read according to the selection of the opinion presentation participants. The opinion presentation participants input, to the opinion presentation participant terminals 300, the opinion presentation participant opinion data including the consent and non-consent opinions for the required reading opinion data and the selective reading opinion data and the scores for the required reading opinion data and the selective reading opinion data which are consented and non-consented, and transmit the opinion presentation participant opinion data to the management computer 100 via the opinion presentation participant terminals 300. The management computer 100 receives the opinion presentation participant opinion data transmitted from the opinion presentation participant terminals 300, calculates an average value of the scores given, by the opinion presentation participants, to the required reading opinion data and the selective reading opinion data for the agreement opinion and the opposition opinion of the experts, and generates the derived agreement and opposition opinions on the issue of the opinion presentation participants as the collective intelligence data.

In addition, in the exemplary embodiment of the present invention, when the opinion presentation participants input, to the opinion presentation participant terminals 300, opinion presentation participant opinion data including consent and non-consent opinions for the required reading opinion data and the selective reading opinion data read by the participants and scores of the required reading opinion data and the selective reading opinion data which are consented and non-consented and transmit the opinion presentation participant opinion data to the management computer 100 via the opinion presentation participant terminals 300, the management computer 100 gives a ranking based on the opinion presentation participant opinion data transmitted from the opinion presentation participant terminals 300 when the participant terminals 300 to perform updating of the lists of the required reading opinion data and the selective reading opinion data. If there is selective reading opinion data having a higher ranking than the provided required reading opinion data, the higher-ranking selective reading opinion data may be updated to new required reading opinion data, and the required reading opinion data having a lower ranking than the selective reading opinion data may be updated to new selective reading opinion data, and a configuration thereof may be further included.

In addition, in the exemplary embodiment of the present invention, in the process of giving a ranking to the expert opinion data with reference with the consent or the non-consent for the expert opinion data transmitted from the opinion presentation participant terminals 300 and the score data thereof, determining a predetermined number of pieces of high-ranking expert opinion data as the required reading opinion data, and determining a predetermined number of pieces of lower-ranking expert opinion data which is not included in the required reading opinion data, as the selective reading opinion data, to be stored therein, when there is the expert opinion data having a higher score than the stored required reading opinion data and selective reading opinion data among the expert opinion data receiving a small number of consents which are not included in the required reading opinion data and the selective reading opinion data, the management computer 100 may further include a configuration for updating the expert opinion data to the predetermined number of pieces of required reading opinion data and selective reading opinion data. As such, the required reading opinion data and selective reading opinion data themselves, and the rankings of the required reading opinion data and selective reading opinion data may be updated in real time.

In addition, the opinion presentation participants may input the rebuttal opinion or supplementary opinion while reading the required reading opinion data and selective reading opinion data on the agreement or opposition to the issue. Preferably, a supplementary opinion may be input in the opinion presentation form when there is a supplementary opinion although the required reading opinion data and the selective reading opinion data are consented, or a rebuttal opinion may be input in the opinion presentation form when there is a rebuttal opinion although the required reading opinion data and the selective reading opinion data are not consented.

The management computer 100 may provide the supplementary opinion and the rebuttal opinion related thereto when providing the required reading opinion data and the selective reading opinion data to the opinion presentation participant terminals 300.

Further, when the opinion presentation participant selects specific data among the required reading opinion data and the selective reading opinion data, the management computer 100 may further include a means capable of providing a history formed for the required reading opinion and the selective reading opinionto the opinion presentation participants.

Further, in the exemplary embodiment of the present invention, it has been described that the expert opinion data is read by the initial participants and the expert opinion data is classified into the required reading opinion data and the selective reading opinion data on the agreement and opposition to the issue of the experts based on the participant opinion data having the consent or non-consent opinion and the score assigned to the consent or non-consent opinion to be stored in the management computer 100 and then the required reading opinion data and the selective reading opinion data is provided to the opinion presentation participants to derive the final collective intelligence convergence data. However, in this case, the participants and the opinion presentation participants may be distinguished or not.

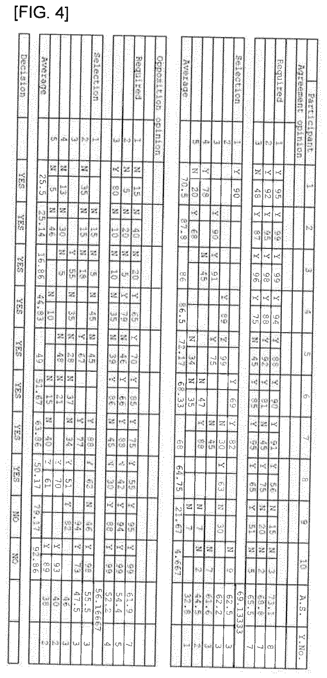

FIG. 4 is a diagram for an example of collective intelligence convergence result data in the exemplary embodiment of the collective intelligence convergence system according to the present invention.

As illustrated in FIG. 4, according to the collective intelligence convergence result data according to the embodiment of the present invention, three pieces of required reading opinion data and five pieces of selective reading opinion data are set as agreement and opposition opinions on expert opinion data of agreement and opposition opinions on a specific issue to be provided to ten opinion presentation participants. The collective intelligence convergence result data represents the consent and non-consent of the required reading opinion data and the selective reading opinion data for the agreement opinion and the opposition opinion and the scores thereof, which are input by the opinion presentation participants. An average value of the scores of the required reading opinion data and the selective reading opinion data of each opinion presentation participant is calculated. In FIG. 4, an average score for the agreement opinion of Participant 1 is 70.5 and an average score for the opposition opinion is 25.5, so that the opinion on the issue of the Participant 1 is derived as an agreement. In addition, an average score for the agreement opinion of Participant 10 is 4.667 and an average score for the opposition opinion is 92.86, so that the opinion on the issue of the Participant 10 is derived as an opposition. In the same manner, the collective intelligence of the issue is calculated into eight agreement participants and two opposition participants among ten participants and the collective intelligence convergence data may be converged into 80 % for agreement and 20 % for opposition.

Further, the result verification management unit 170 of the exemplary embodiment of the collective intelligence convergence system according to the present invention is a configuration to notify the collective intelligence convergence data to the issue provider and verify the collective intelligence convergence result by the issue provider.

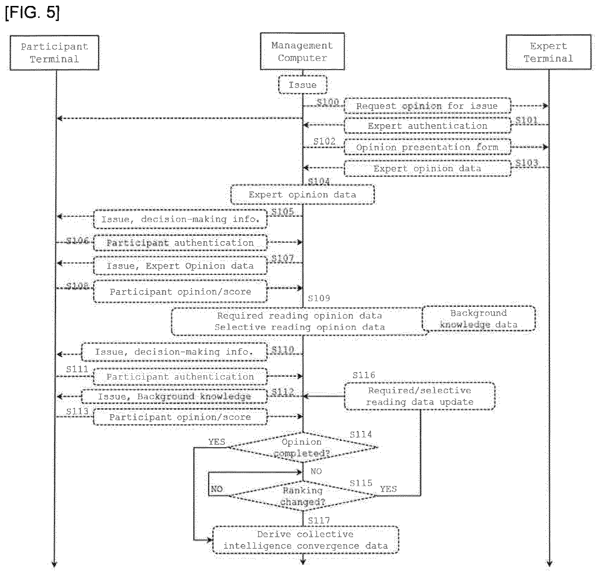

FIG. 5 is a flowchart for describing an exemplary embodiment of a collective intelligence convergence method according to the present invention. As illustrated in FIG. 5, a collective intelligence convergence method according to the present invention includes steps of: transmitting, by a management computer, an opinion presentation request for an issue to at least one expert terminal by inquiring at least one expert in a corresponding field in an expert pool in associated with the issue received (S100); performing, by the at least one expert, expert authentication by accessing the management computer using the at least one expert terminal (S101); providing, by the management computer, an expert opinion presentation form to the at least one expert terminal of the at least one expert whose authentication is completed (S102); transmitting, by the at least one expert terminal, to the management computer, expert opinion data including an agreement or opposition opinion on the issue, grounds and description data thereof which are input by the at least one expert in the opinion presentation form provided by the management computer (S103); and storing, by the management computer, the expert opinion data of the agreement or opposition opinion on the issue transmitted from the at least one expert terminal (S104); exposing, by the management computer, decision making information about the issue to opinion presentation participant terminals of participant members (S105); performing, by the opinion presentation participant terminals, opinion presentation participant authentication by accessing the management computer (S106); providing, by the management computer, a predetermined number of pieces of expert data for the issue to the opinion presentation participant terminals of the opinion presentation participants whose authentication is completed (S107); transmitting, to the management computer, opinion presentation participant opinion data including consent and non-consent data for the expert opinion data on the issue input by the opinion presentation participants, score data thereon, and separate opinion data when a separate opinion of any opinion presentation participant is presented (S108); determining, by the management computer, a predetermined number of pieces of high-ranking expert opinion data as required reading opinion data by giving a ranking to the expert opinion data based on the opinion presentation participant opinion data transmitted from the opinion presentation participant terminals and determining the expert opinion data which is not included in the required reading opinion data and the separate opinion data of the opinion presentation participants as the selective reading opinion data to store the determined data as background knowledge data (S109); exposing, by the management computer, decision making information about the issue to opinion presentation participant terminals of opinion presentation participant members (S110); performing, by the opinion presentation participant terminals, opinion presentation participant authentication by accessing the management computer (S111); providing, by the management computer, background knowledge data for the issue to the opinion presentation participant terminals of the opinion presentation participants whose authentication is completed (S112); transmitting, to the management computer, opinion presentation participant opinion data including consent and non-consent data for the required reading opinion data and the selective reading opinion data on the issue included in the background knowledge data input by the opinion presentation participants, and score data thereof (S113); verifying, by the management computer, whether the opinion presentation of the opinion presentation participants participating in the opinion presentation is completed (S114); verifying, by the management computer, whether the rankings of the required reading opinion data and the selective reading opinion data are changed based on the opinion presentation participant opinion data while receiving continuously the opinion presentation of the opinion presentation participants when the opinion presentation of the opinion presentation participants is not completed (S115); changing, by the management computer, the required reading opinion data and the selective reading opinion data themselves and the rankings thereof to provide the changed rankings to the opinion presentation participant terminals when it is verified that the rankings of the required reading opinion data and the selective reading opinion data are changed (S116); and deriving, by the management computer, collective intelligence convergence data based on the received opinion presentation participant opinion data when it is verified that the opinion presentation of the opinion presentation participants is completed (S117).

The exemplary embodiments of the present invention described above are only some of various exemplary embodiments. It is natural that various exemplary embodiments included in the spirit of the present invention are included in the scope of the present invention, in which a predetermined number of related-field experts on an issue presented in the present invention present expert opinion data including key grounds and detailed description thereof for the agreement or opposition opinion for the issue; rankings of the expert opinion data are determined based on when participants present consent or non-consent opinions, scores thereof, and separate opinions of the participants by providing the expert opinion data to the participants; a predetermined number of pieces of required reading opinion data to be necessarily read by the opinion presentation participants on the issue is determined according to the rankings; expert opinion data which is not included in the required reading opinion data and separate opinions of the participants is determined as a predetermined number of pieces of selective reading opinion data to be selectively read by the opinion presentation participants; the required reading opinion data and the selective reading opinion data is provided to the opinion presentation participants to generate opinion presentation participant opinion data by giving the consent or non-consent opinion and the score; and collective intelligence convergence data for the issue is derived based on the opinion presentation participant opinion data.

### Industrial Applicability

The present invention can be applied to a social industrial business such as opinion poll.

## Claims

1. A collective intelligence convergence system comprising:
an expert opinion management unit which receives and stores expert opinion data such as an opinion on agreement or opposition to a presented issue, at least one ground for the opinion, description of the opinion, and the like, which are transmitted by at least one participating expert;
a background knowledge management unit which provides participants with at least one expert opinion data received by the expert opinion management unit to classify the provided expert opinion data into at least one piece of required reading opinion data and at least one piece of selective reading opinion data based on consent and non-consent data to the expert opinion data and score data assigned to the expert opinion data, which are input by opinion presentation participants of the participants and stores the classified data as a background knowledge data about the issue;
a participation data management unit which provides the background knowledge data stored in the background knowledge management unit to the opinion presentation participants to allow the opinion presentation participants to read the background knowledge data and to input opinion presentation participant opinion data including consent or non-consent data to the input required reading opinion data and selective reading opinion data and score data thereof and which receives the opinion presentation participant opinion data to process the received participant opinion data as collective intelligence convergence data; and
an expert opinion ranking management unit which determines a ranking based on the opinion presentation participant opinion data stored in the participation data management unit to update the required reading opinion data and the selective reading opinion data based on the ranking and provides the updated data to the background knowledge management unit.

2. The collective intelligence convergence system of claim 1, further comprising a minority opinion management unit which receives a small number of consents by the participants or the opinion presentation participants, but gives a ranking rising position to an opinion having a high score.

3. The collective intelligence convergence system of claim 2, wherein the opinion managed by the minority opinion management unit is at least one piece of the selective reading opinion data.

4. The collective intelligence convergence system of claim 1, further comprising an opinion history management unit which provides information data on a source of the corresponding opinion data and a rebuttal or supplementary opinion when the opinion presentation participants read the required reading opinion data and the selective reading opinion data.

5. The collective intelligence convergence system of claim 1, further comprising a result verification management unit which generates a predetermined form of a report based on the collective intelligence convergence data stored in the participation data management unit to provide the generated report to an issue provider and provides the issue provider with the collective intelligence data forming the basis of the report so as to be verified by the issue provider.

6. The collective intelligence convergence system of claim 1, wherein the updating of the required reading opinion data and the selective reading opinion data by the expert opinion ranking management unit is performed in real time.

7. The collective intelligence convergence system of claim 1, wherein the expert opinion management unit provides an opinion presentation form to the expert terminals of the experts, and the opinion presentation form includes: an opinion summary input portion containing a predetermined number of characters for the agreement or opposition opinion on the issue therein; key ground input portions containing key grounds on the agreement or opposition opinion by the predetermined number therein; and a detailed description input portion containing a detailed description of the agreement or opposition opinion on the issue.

8. The collective intelligence convergence system of claim 1, wherein the collective intelligence convergence data is formed by setting required reading opinion data and selective reading opinion data of agreement and opposition opinions on the expert opinion data of the agreement or opposition opinion on the issue to a predetermined number, respectively, representing consent, non-consent, and scores thereof of the required reading opinion data and the selective reading opinion data for the agreement and opposition opinions input by the opinion presentation participants, and calculating an average value of the scores of the required reading opinion data and selective reading opinion data of each opinion presentation participant.

9. A collective intelligence convergence method comprising the steps of:
receiving, by a management computer, an agreement or opposition opinion on a presented issue from a predetermined number of related-field experts on the presented issue as expert opinion data including key grounds thereof and detailed description;
receiving, by the management computer, opinion presentation participant opinion data including a consent or non-consent opinion and scores of the opinion presentation participants by providing the expert opinion data to the opinion presentation participants;
determining, by the management computer, rankings of the expert opinion data based on the opinion presentation participant opinion data, determining a predetermined number of pieces of required reading opinion data to be necessarily read by the opinion presentation participants on the issue according to the rankings thereof, and determining a predetermined number of pieces of selective reading opinion data to be selectively read by the opinion presentation participants with respect to expert opinion data which is not included in the required reading opinion data and any separate opinion of the opinion presentation participants;
receiving, by the management computer, opinion presentation participant opinion data including a consent or non-consent opinion and scores from the opinion presentation participants by providing the required reading opinion data and the selective reading opinion data to the opinion presentation participants; and
deriving, by the management computer, collective intelligence convergence data for the issue based on the opinion presentation participant opinion data.

10. A collective intelligence convergence method comprising steps of:
transmitting, by a management computer, an opinion presentation request related to an issue to at least one expert terminal by inquiring at least one expert in the field in an expert pool in associated with the issue received;
performing, by the at least one expert, expert authentication by accessing the management computer using the at least one expert terminal;
providing, by the management computer, an expert opinion presentation form to the at least one expert terminal of the at least one expert whose authentication is completed;
transmitting, by the at least one expert terminal, to the management computer, expert opinion data including an agreement or opposition opinion on the issue, grounds and description data thereof which are input by the at least one expert in the opinion presentation form provided by the management computer;
storing, by the management computer, the expert opinion data of the agreement or opposition opinion on the issue transmitted from the at least one expert terminal;
exposing, by the management computer, decision making information about the issue to opinion presentation participant terminals of opinion presentation participant members;
performing, by the opinion presentation participant terminals, opinion presentation participant authentication by accessing the management computer;
providing, by the management computer, a predetermined number of pieces of expert data for the issue to the opinion presentation participant terminals of the opinion presentation participants whose authentication is completed;
transmitting, to the management computer, opinion presentation participant opinion data including consent and non-consent data for the expert opinion data on the issue, score data thereon, which are input by the opinion presentation participants, and separate opinion data when a separate opinion of the participant is presented;
determining, by the management computer, a predetermined number of pieces of high-ranking expert opinion data as required reading opinion data by giving a ranking to the expert opinion data based on the opinion presentation participant opinion data transmitted from the opinion presentation participant terminals and determining the expert opinion data which is not included in the required reading opinion data and the separate opinion data of the opinion presentation participants as the selective reading opinion data to store the determined data as background knowledge data;
exposing, by the management computer, decision making information about the issue to opinion presentation participant terminals of opinion presentation participant members;
performing, by the opinion presentation participant terminals, opinion presentation participant authentication by accessing the management computer;
providing, by the management computer, background knowledge data for the issue to the opinion presentation participant terminals of the opinion presentation participants whose authentication is completed;
transmitting, to the management computer, opinion presentation participant opinion data including consent and non-consent data for the required reading opinion data and the selective reading opinion data on the issue included in the background knowledge data, and score data thereof, which are input by the opinion presentation participants;
verifying, by the management computer, whether the opinion presentation of the participants participating in the opinion presentation is completed;
verifying, by the management computer, whether the rankings of the required reading opinion data and the selective reading opinion data are changed based on the opinion presentation participant opinion data while receiving continuously the opinion presentation of the opinion presentation participants when it is verified that the opinion presentation of the opinion presentation participants is not completed;
changing, by the management computer, the required reading opinion data and the selective reading opinion data themselves or the rankings thereof to provide the changed data or rankings to the opinion presentation participant terminals when it is verified that the rankings of the required reading opinion data and the selective reading opinion data are changed; and
deriving, by the management computer, collective intelligence convergence data based on the received opinion presentation participant opinion data when it is verified that the opinion presentation of the opinion presentation participants is completed.
